# EUROPÄISCHE PATENTSCHRIFT

(11) **EP 2 293 913 B1**
(45) Veröffentlichungstag und Bekanntmachung des Hinweises auf die Patenterteilung: **04.01.2012**
(21) Anmeldenummer: 09749873.7
(22) Anmeldetag: 20.05.2009
(51) Int. Cl.: B29C 44/56, B29C 67/00, B29K 105/04

(54) **VERFAHREN ZUR HERSTELLUNG EINER THERMOPLASTISCHEN INTEGRALSCHAUM-KUNSTSTOFFPLATTE MIT WENIGSTENS EINER GEGLÄTTETEN SEITENKANTE**
METHOD FOR PRODUCING A THERMOPLASTIC INTEGRAL-FOAM PLASTIC PANEL COMPRISING AT LEAST ONE SMOOTHED LATERAL EDGE
PROCÉDÉ DE RÉALISATION D'UNE PLAQUE EN MOUSSE STRUCTURÉE THERMOPLASTIQUE PRÉSENTANT AU MOINS UNE ARÊTE LATÉRALE LISSÉE

(30) Priorität: 20.05.2008 DE 102008024349
(43) Veröffentlichungstag der Anmeldung: 16.03.2011
(73) Patentinhaber: Veka AG, 48324 Sendenhorst (DE)
(72) Erfinder: JAROSCH, Helmut, 48324 Sendenhorst (DE); POTTEK, Dirk, 48324 Sendenhorst (DE)
(74) Vertreter: Tarvenkorn, Oliver
(86) Internationale Anmeldenummer: PCT/EP2009/056148
(87) Internationale Veröffentlichungsnummer: WO 2009/141383

(56) Entgegenhaltungen:
- WO-A1-2005/044543
- DE-A1- 10 352 112
- JP-A- 57 176 131
- JP-A- 2001 239 596
- DATABASE WPI Week 197701 Thomson Scientific, London, GB; AN 1977-00745Y XP002588468 -& JP 51 131580 A (UBE NITTO KASEI CO) 16. November 1976 (1976-11-16)

## Beschreibung

Die Erfindung betrifft ein Verfahren zur Herstellung einer thermoplastischen Integralschaum-Kunststoffplatte mit wenigstens einer geglätteten Seitenkante, bei dem die Seitenkante der Kunststoffplatte bis wenigstens zur Schmelztemperatur erwärmt und durch Andruck an eine Glättungsfläche eines Glättungswerkzeugs homogenisiert und/ oder geglättet wird und wobei zugleich zur Seitenkante benachbarte Bereiche der Plattenoberflächen durch Kühlung auf einer Temperatur unterhalb der Erweichungstemperatur gehalten werden.

Bekannt sind durch Extrusion hergestellte, sogenannte Integralschaumplatten, bei der porenfreie, verdichtete Oberflächenbereiche einen grobporigen Kernbereich umschließen. Die Porosität des Kernbereichs führt zu einem niedrigeren spezifischen Gewicht der Kunststoffplatte gegenüber einem Vollmaterial. Die glatten Oberflächen ermöglichen eine Bedruckung und leichte Säuberung. Problematisch sind die offenporigen Seitenkanten, die einzeln mit Umleimern versehen werden müssen, die mit großem Aufwand aufgebracht werden müssen. Es besteht auch die Gefahr, dass sich der Umleimer während der Gebrauchsdauer der Platte löst. Geringfügige Überstände des Umleimers über die Plattenoberfläche hinaus führen zu Schmutzansammlungen, die zumindest optisch störend sind oder aus hygienischer Sicht sogar problematisch sein können.

In der DE 103 52 112 A1 ist ein Verfahren zur Herstellung einer thermoplastischen Integralschaum-Kunststoffplatte mit wenigstens einer geglätteten Seitenkante beschrieben. Um auch die Seitenkanten porenfrei herzustellen, werden diese nach der Kalibrierung noch einmal bis zur Schmelzetemperatur erwärmt. Die zu den Seitenkanten benachbarten Oberflächenbereiche werden gleichzeitig durch Kühlung auf einer Temperatur unterhalb der Erweichungstemperatur des Kunststoffs, wobei es sich insbesondere um Hart-PVC handelt, gehalten. Durch die nur partielle Erwärmung ist eine Verdichtung derart möglich, dass die Poren geschlossen werden und die Seitenkanten der endlos extrudierten Integralschaumplatte ebenso glatt ausgebildet werden wie deren Oberflächenbereiche. Die gleichzeitige Kühlung der randnahen Oberflächenbereiche bewirkt die Stabilisierung der Randzonen, so dass diese durch die Nachbehandlung der Seitenkante nicht beeinträchtigt werden. Mit diesem Verfahren werden im Rahmen einer Online-Nachbehandlung gute Ergebnisse erzielt, also bei einer Nachbehandlung, die dem Extrusions- und Kalibrierprozess unmittelbar nachgeschaltet ist. Hierbei ist die Außenkante der aus der Breitschlitzdüse des Extruders heraustretenden Tafel produktionsbedingt bereits teilweise vorverdichtet, so dass eine abschließende Glättung im Vorbeilauf an einer einzelnen Glättungsvorrichtung je Seitenkante möglich ist. Darin werden, wie zuvor beschrieben, noch offene Poren geschlossen und es wird eine vollständige Glättung der Seitenkante erreicht.

Bei Zuschnitten jedoch, die aus einer solchen Tafel herausgetrennt werden, sind maximal zwei gegenüberliegende Kanten geglättet, wohingegen die nachträglich eingebrachten Schnittkanten extrem offenporig sind, so dass beträchtliche Materialumschichtungen von geschmolzenem Kunststoff erforderlich sind, um die Poren zu schließen. Glatte Schnittkanten können in diesem Fall nur erreicht werden, indem die Schnittkante mehrfach erwärmt und die Glättungsvorrichtung daran mit hohem Druck angepresst wird. Hierdurch ergeben sich zum einen hohe Fertigungszeiten, zum anderen besteht die Gefahr, dass sich bei mehrfacher Durchführung der Nachbehandlung die randseitigen Oberflächenbereiche trotz Kühlung zu stark erwärmen und es zu einer optisch sichtbaren Verformung der meist hochglänzend ausgebildeten Oberfläche kommt.

Aufgabe der Erfindung ist es somit, ein Verfahren zur Nachbehandlung einer geschnittenen Integralschaumplatte anzugeben, bei der mit kürzerer Fertigungszeit und mit einem Durchlauf das gewünschte Ergebnis in Form einer homogenen, geglätteten Seitenkante erhalten werden kann.

Diese Aufgabe wird durch ein Verfahren mit den Merkmalen des Anspruchs 1 gelöst.

Erfindungswesentlich ist der Vorbehandlungsschritt, durch welchen die konkave Querschnittsform der Integralschaumplatte im Bereich der Seitenkante hergestellt wird. Diese konkave Form führt dazu, dass sich die randseitigen Oberflächenbereiche in dünn auslaufenden Zungen erstrecken, wohingegen ein zwischen ihnen liegender Materialbereich vollständig entfernt ist. Durch gezielte Erwärmung nur von der Seitenkante her wird erreicht, dass zunächst nur die Spitzen der Zungen sukzessive erwärmt werden, dadurch erweichen und umgebogen werden können, um einen Umklappvorgang eines Großteils der Zungen einzuleiten. Nach dem Umklappen laufen die Spitzen aufgrund des fortwährenden Andrucks an das Glättungswerkzeug nach und nach auf die Mitte des Profilquerschnittes zu, bis sie sich dort vereinigen. Die zwischen ihnen liegende Fließnaht kann durch weiteres Entlangführen an der Glättungsfläche glatt gezogen werden.

Durch zusätzliches Nachdrücken mit der Glättungsvorrichtung können unterhalb der vereinigten Zungenspitzen verbleibende Hohlräume geschlossen werden.

Wesentlich ist weiter, dass die horizontalen randseitigen Oberflächenbereiche stets gekühlt werden, so dass es nicht zu einer vollständigen Aufschmelzung der Zungen kommt. Vielmehr sollen unter der Plattenoberfläche liegende Materialbereiche an den Zungen zunächst noch eine Abstützung bewirken, und dann auch nur nach und nach so weit erweicht werden, dass ein Umklappen der Zungen möglich ist, bis sich die Zungenspitzen vereinigen.

Es sei klar gestellt, dass im Sinne der vorliegenden Erfindung solche Kunststoffplatten als Integralschaumplatten bezeichnet werden, die einen porösen Kern und wenigstens eine verdichtete Oberfläche aufweisen, ganz gleich ob sie nach dem sogenannte Celluka-Verfahren oder durch Coextrusion hergestellt worden sind.

Sofern es sich um nach dem Celluka-Verfahren hergestellte Integralschaumplatten handelt, können im Kunststoff verbliebene Treibmittelreste bei der Erwärmung neu aktiviert werden, so dass auch von Innen her eine Expansion erfolgt, die schließlich zur glattflächigen Anlage am Glättungswerkzeug führt.

"Konkav" bezeichnet im Sinne der Erfindung eine rinnenförmige Vertiefung an der Seitenkante.

Die konkave Profilform kann in Form einer V-förmigen Nut hergestellt werden, die mit einem entsprechenden Fräswerkzeug einfach herstellbar ist und für kleine Plattenstärken zu dem gewünschten Ergebnis führt.

Vorzugsweise wird als Schnittmaß des Plattenzuschnitts zu dem gewünschten Sollmaß die Hälfte der Plattenstärke als Zuschlagmaß gegeben. Bei einer 10 mm starken Integralschaumplatte wird also beispielsweise die V-förmige Nut mit einer Tiefe von 5 mm, gemessen vom Nutgrund bis zur Spitze der seitlichen Zungen, eingebracht.

Bei größeren Plattenstärken von ca. 17 mm und mehr hat sich gezeigt, dass bei einer V-förmigen Nutform an der Basis der Zungen zu große Volumina vorhanden sind, die erwärmt werden müssen, um den beschriebenen Verformungsvorgang gemäß der Erfindung einzuleiten. Dadurch muss die Vorschubgeschwindigkeit der Platte entlang der Glättungsvorrichtung stark reduziert werden.

Insbesondere bei dicken Platten ist es somit vorteilhaft, Querschnittsformen zu wählen, bei denen die Basis der Zungen eine geringere Dicke - gemessen senkrecht zur Plattenoberfläche - besitzt als die Zungen einer V-förmigen Nut, welche die Profilform eines rechtwinkligen Dreiecks besitzen.

Solche Zungen mit dünner Basis werden insbesondere durch halbkreisförmige oder trapezförmige Nuten erreicht. Bei dieser Nutform hat es sich als vorteilhaft erwiesen, die Nuttiefe mit dem 0,45 bis0,55-fachen der Plattenstärke anzusetzen. Die Breite des Nutgrundes sollte zwischen 25% und 40% der Plattenstärke betragen.

Vorteilhaft ist die Verwendung eines Werkzeugs, bei dem der Profilquerschnitt durchgängig dem gewünschten Profil bei der Entformungsstelle entspricht. Damit ist die Werkzeugprofilierung unabhängig von der Seitenkantenprofilierung, muss also nicht an die Nutform angepasst werden. Vorteilhaft ist dies aber auch, weil zunächst nur die Zungespitzen anliegen, so dass nur dort eine Wärmeübertragung durch Wärmeleitung statt finden kann. Die Bereiche der Zungen hingegen, die der Nut zugewandt sind, werden nur durch Wärmestrahlung erwärmt. Da Integralschaumplatten üblicherweise aus weißem PVC mit erheblichen Mengen an Titandioxid bestehen, ist die Absorption der Strahlung aber gering. Der Wärmeentzug durch die oberflächenseitige Kühlung überwiegt in diesen Bereich somit, so dass es nicht zu einer vorzeitigen Erweichung kommt.

In den Kehlbereichen am Übergang vom Plattenbereich, welcher gekühlt ist, zum stirnseitigen Kantenbereich, welcher geheizt ist, sollten Radien mit einem Durchmesser von ca. 5 bis 30 % der Plattenstärke vorgesehen sein, um die Umklappbewegung der erweichten Spitzen an den Zungen einzuleiten.

In der axialen Vorschubrichtung besitzt das Werkzeug eine zur Vorschubrichtung angestellte Schrägfläche, so dass die zunehmend umgebogenen Spitzen und die Andruckfläche aufeinander zu laufen.

Als Vorschubgeschwindigkeit zwischen Platte und Glättungswerkzeug hat sich bei Integralschaumplatten aus Hart-PVC ein Wert v = 1 bis 2 m/min als günstig erwiesen.

Vorteilhaft ist weiterhin eine Vortemperierung der gesamten Platte oder der randnahen Plattenbereiche. Durch die Vortemperierung wird die Zeit zum Erwärmen der Zungenspitzen bis zum Erreichen der Erweichungstemperatur verkürzt, ohne dass die Restbereiche der Platten in Mitleidenschaft gezogen werden. Durch die Vortemperierung sind dann kürzere Fertigungszeiten bzw. schnellere Vorschubgeschwindigkeiten erzielbar.

Möglich ist eine gleichzeitige Nachbearbeitung zweier sich gegenüber liegender Kanten eines Zuschnitts. Um eine absolut porenfreie und glatte Seitenkante zu erhalten, muss stets geringfügig mehr Kunststoffmaterial verformt werden, als zum Füllen der konkaven Nut notwendig ist. Dieser Materialüberschuss wird aufgrund des Vorschubs der Seitenkante in Relation zum Glättungswerkzeug bis zum Eckenbereich des Zuschnitts verdrängt, wo sich demzufolge ein geringfügiger Überstand ausbildet, der insbesondere durch spanende Verfahren entfernt werden muss.

Nach einem derartigen Zwischenbearbeitungsschritt, bei dem etwaige Überschüsse abgetragen werden, kann der Zuschnitt um 90° gedreht werden. Die Glättungswerkzeuge werden dann wieder beidseitig an den Zuschnitt herangefahren und es werden die anderen beiden Seitenkanten nachbehandelt.

Nachdem auch nach diesem Verfahrensschritt etwaige Überstände entfernt sind, wird ein Integralschaumplattenzuschnitt erhalten, der allseitig geschlossene Oberflächen aufweist, die einen hohen Glanzgrad haben. Diese geschlossenen Oberflächen sind auf einfache Weise rückstandfrei zu reinigen und daher insbesondere für die Anwendung in Hygienebereichen geeignet.

Die Erfindung wird nachfolgend mit Bezug auf die Zeichnung näher erläutert. Die Figuren zeigen jeweils im Schnitt:
- Fig. 1a bis 1c: Profilquerschnitte jeweils in verschiedenen Verfahrensstadien;
- Fig. 2: je einen Plattenquerschnitt vor und nach der Glättung in überlagerter Darstellung;
- Fig. 3a bis 3c: den Randbereich einer Integralschaumplatte innerhalb des Glättungswerkzeugs jeweils in verschiedenen Verfahrensstadien; und
- Fig. 4: eine Integralschaumplatte in einer Glättungsvorrichtung in Schnittansicht von oben.

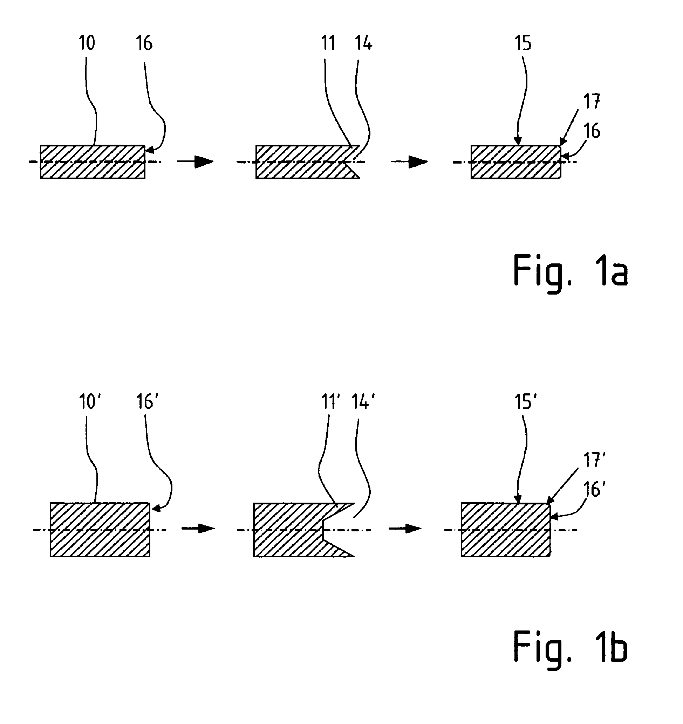

In den Fig. 1a bis 1c sind jeweils drei Profilquerschnitte dargestellt, die unterschiedliche Verfahrensstadien repräsentieren.

Links in Fig. 1a ist der randseitige, scharfkantige Profilquerschnitt einer geschnittenen, relativ dünnen Integralschaumplatte 10 skizziert. Er besitzt planparallele Oberflächen 15 und rechtwinklig dazu eine Seitenkante 16, die aufgrund eines Trennschnitts entstanden ist, mit dem die Platte 10 aus einer größeren Tafel herausgeschnitten worden ist.

In einem Vorbereitungsschritt, der der mittleren Darstellung entspricht, wird eine V-förmige Nut 14 eingebracht, so dass beidseits davon Vorsprünge mit dreieckigem Querschnitt entstehen, die hier als Zungen 11 bezeichnet sind.

Durch das Nachbehandlungsverfahren, das nachfolgend noch näher erläutert wird, werden die vorspringenden Zungen 11 sukzessive umgeklappt, bis sie sich vereinigen und den dahinterliegenden Freiraum schließen. Es entsteht eine glatte Seitenkante 16 ohne Poren, die mit einer Rundung 17 in die weitere Plattenoberfläche 15 übergeht, entsprechend der rechten Darstellung.

Gleiches gilt für die Platte 10' mittlerer Dicke, die in Fig. 1b links dargestellt ist. Sie wird in einem Vorbehandlungsschritt mit einer trapezförmigen Nut 14' versehen. Das anschließende Glättungsverfahren führt auch hier zur Schaffung einer geglätteten Seitekante 16', die mit Radien 17' in die Plattenoberfläche 15' übergeht.

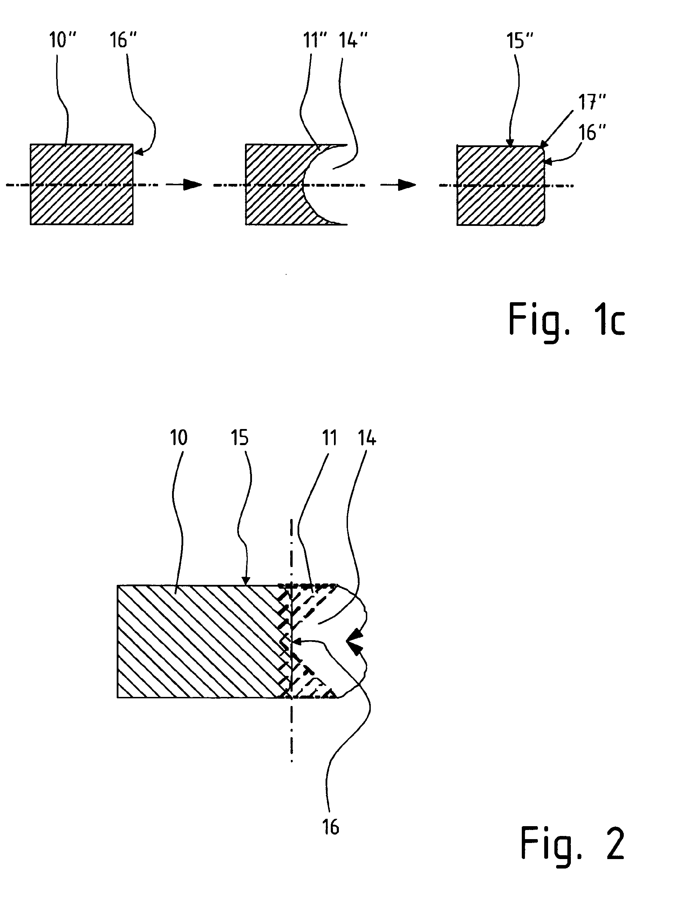

In Fig. 1c ist eine besonders dicke Platte 10" mit einer Stärke von z. B. 24 mm gezeigt. Auch dort ist in der linken Schemazeichnung ein scharfkantiger Randbereich nach einem Sägeschnitt gezeigt. Es wird bei der Vorbehandlung eine kreissegmentförmige Ausnehmung vorgenommen, so dass hier eine konkave Nut 14" gebildet ist. Der Vorteil dieser Nutform liegt darin, dass an der besonderes dünnen Basis der Zunge 11" in Relation gesehen weniger Volumen erwärmt und verformt werden muss, als bei der trapezförmigen Nut 14' gemäß Fig. 1b.

Auch bei der trapezförmigen Nut 14' nach Fig. 1b sind die Volumenbereiche jeder Zunge 11' in Relation zur Plattenstärke kleiner als bei den Zungen 11, die bei einer V-förmigen Nut 14 gemäß Fig. 1a entstehen.

Fig. 2 zeigt in einer Überlagerungsdarstellung den Ausgangszustand nach der Vorbehandlung, bei der die Nut 14 eingebracht worden ist und den Endzustand mit einer geglätteten Seitenkante 16 und Rundungen. Der Ausgangszustand ist in gestrichelter Form dargestellt. Durch die Überlagerung zeigt sich, dass die Vorform einen beträchtlichen Zuschlag im Längenmaß benötigt. Der gesamte Volumenbereich rechts der strichpunktierten Linie wird bei dem Verfahren der Erfindung verformt und komprimiert und zur Homogenisierung im Bereich der Seitenkante 16 abgelagert, wie durch die sich kreuzende Schraffur unmittelbar links entlang der Strichpunktlinie dargestellt.

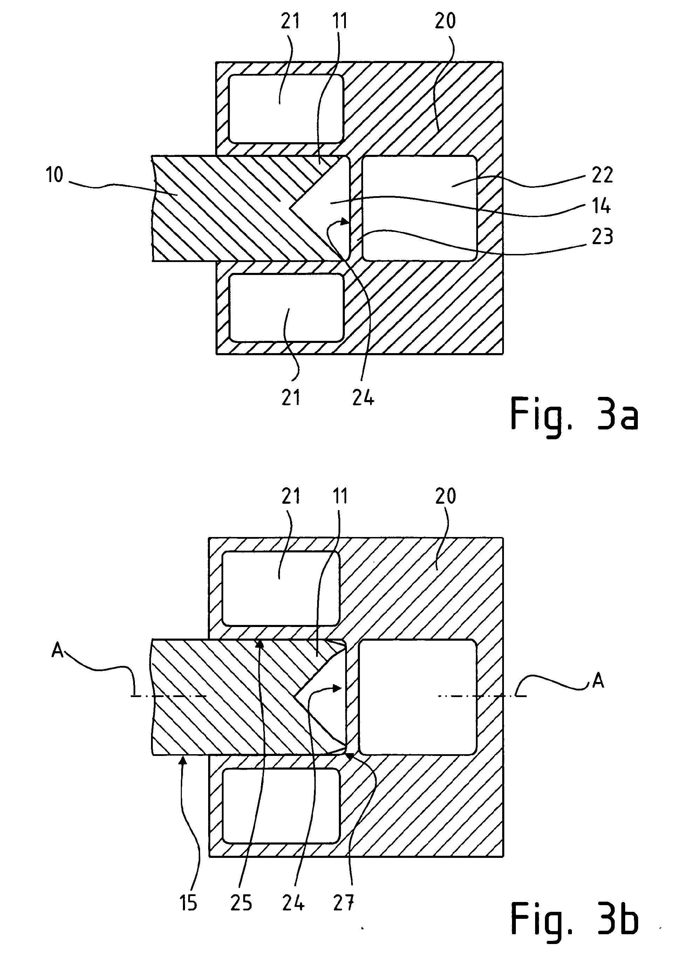

Das erfindungsgemäße Verfahren wird anhand der Fig. 3a bis 3c nachfolgend erläutert:
In Fig. 3a ist ein Zuschnitt einer Integralschaumplatte 10 in ein Glättungswerkzeug 20 eingeführt. Die Integralschaumplatte 10 ist bereits mit einer V-förmigen Nut 14 versehen, entsprechend der Abfolge in Fig. 1a.

Das Werkzeug 20 besitzt Kühlkanäle 21 in denjenigen Bereichen, die den Oberflächenschichten 15 zugewandt sind.

Ein Steg 23 ist durch eine temperierte Flüssigkeit in einem Heizkanal 22 oder durch ein in den Heizkanal eingesetztes Thermoelement beheizt.

Zwischen den Kühl- und Heizkanälen 21, 22 können hier nicht dargestellte Temperaturtrennungszonen vorgesehen sein, um die Wärmeleitung entsprechend zu reduzieren, beispielsweise in Form von zusätzlichen luftgefüllten Schlitzen.

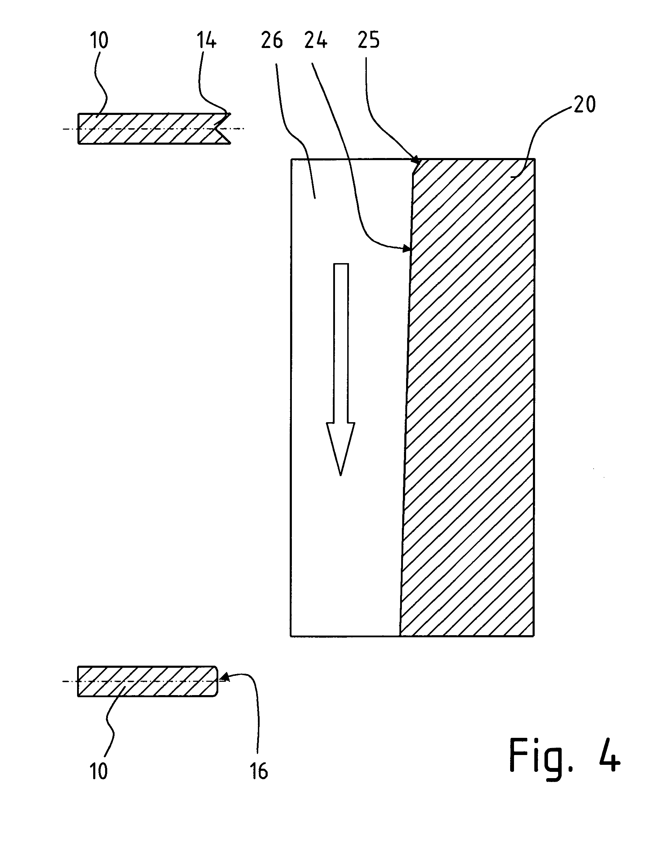

Das Werkzeug 20 bzw. dessen Glättungsfläche 24 ist in einem spitzen Winkel von 1° bis 5° in Bezug auf die Vorschubrichtung schräg gestellt, wie die Ansicht von oben in Fig. 4 zeigt. Dargestellt ist ein Schnitt auf halber Höhe durch das Werkzeug 20 entlang der Linie A-A in Fig. 3b. Links der Glättungsfläche 24 ist die Nut 26 erkennbar, die die Platte aufnimmt und führt. Der Blockpfeil kennzeichnet die Durchlaufrichtung der Platte im Werkzeug 20. Zu Beginn der schräg angestellten Glättungsfläche 24 ist eine Einlaufschräge 25 ausgebildet, die in einem grö-βeren Winkel zur Vorschubrichtung ausgerichtet ist als die Glättungsfläche 24 selbst. Links des Werkzeugs 20 sind in Fig. 4 randseitige Schnitte eine Platte 10 gezeigt: oben mit einer V-förmigen Nut 14 nach dem Vorbehandlungsschritt, unten mit fertig geglätteter Seitenkante 16.

Die Spitze der Zunge 11 trifft während des Vorschubs auf eine Stelle innerhalb des Werkzeugs 20 auf die Glättungsfläche 24. Durch den Kontakt kommt es zur Wärmeeinleitung in die Zunge 11 und zu deren allmählicher Erweichung.

Durch den weiteren Vorschub werden die Zungen 11, die inzwischen partiell erweicht sind, stärker an die Glättungsfläche 24 angepresst und knicken allmählich ab, wie in Fig. 3b angedeutet. Durch Radien 27 in dem Winkelbereich zwischen der Glättungsfläche 24 und den Kontaktflächen 25 für die Oberflächenbereiche 15 wird die Einknick- oder Umklappbewegung der Zungenspitzen in Richtung der Plattenmitte eingeleitet.

Aufgrund des Kontakts der Randbereiche der Oberflächen 15 mit den Bereichen 25 des Werkzeugs 20 wird eine fortwährende Kühlung zur Wahrung der Formstabilität erreicht. Es gerät immer nur der direkt dem Heizsteg 23 zugewandte Bereich der Zungen an die Glättungsfläche 24, von der aus eine Wärmeübertragung möglich ist.

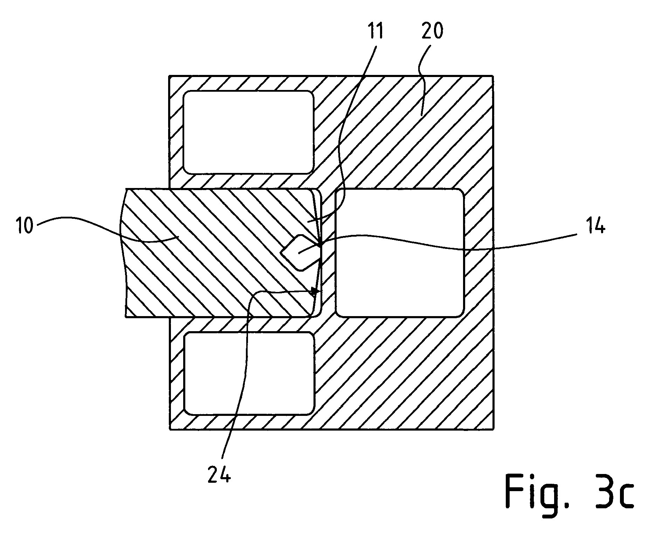

Fig. 3c zeigt einen Zustand, bei dem die Zungenspitzen bereits kurz vor der Vereinigung stehen. Das an der Stelle der ehemaligen Nut 14 verbleibende Leervolumen ist bereits beträchtlich reduziert und wird bei der anschlie-βenden Kompression vollständig ausgefüllt.

Aufgrund der konkaven Nutform wird zugleich auch das Zeitverhalten des Nachbearbeitungsprozesses gesteuert. So dauert es relativ lange in Bezug auf die gesamte Durchlaufzeit einer Kantenstelle durch das Glättwerkzeug, bis die Spitzenbereiche der Zungen erwärmt sind und, wie in Fig. 3b gezeigt, umklappen. Durch diese Verzögerung wird gewährleistet, dass in den dahinterliegenden Bereichen der Zunge 11 zunächst soviel Formstabilität bestehen bleibt, dass keine Einfallstellen an den Randbereichen der Oberflächen 15 entstehen und dass die Zungen 11 nicht unkontrolliert in sich einknicken.

Sind dann erst einmal großflächige Bereiche des Zungenquerschnitts erwärmt und kommt es darüber hinaus zu einer nahezu vollflächigen Anlage der Außenbereiche der Zungen an die Glättungsfläche 24, wie in Fig. 3c gezeigt, so ist dann die abschließende Formgebung zum vollständigen Schließen aller Poren und Leerräume in einer relativ kurzen Zeitspanne zu erreichen. Bei einem Stadium gemäß Fig. 3c besteht keine Gefahr mehr, dass eine unkontrollierte Verformung der vormaligen Zungenbereiche eintritt.

## Patentansprüche

1. Verfahren zur Herstellung einer thermoplastischen Integralschaum-Kunststoffplatte (10; 10'; 10") mit wenigstens einer geglätteten Seitenkante (16, 16', 16"), bei dem die Seitenkante (16, 16', 16") der Kunststoffplatte (10; 10'; 10") bis wenigstens zur Schmelztemperatur erwärmt und durch Andruck an eine Glättungsfläche (24) eines Glättungswerkzeugs (20) homogenisiert und/oder geglättet wird und wobei zugleich zur Seitenkante benachbarte Bereiche der Plattenoberflächen (15) durch Kühlung auf einer Temperatur unterhalb der Erweichungstemperatur gehalten werden,
**dadurch gekennzeichnet,**
- **dass** in einem Vorbehandlungsschritt die Seitenkante derart mit einer konkaven Nut (14) profiliert wird, dass die Plattenoberflächen (15) zum Seitenrand hin beidseits in vorspringenden Zungen (11) auslaufen,
- **dass** die Zungenspitzen durch Andrücken an die Glättungsfläche (24) aufgeschmolzen und weitere Querschnittsbereiche der Zungen (11) erweicht werden und
- **dass** eine Umklappbewegung der Zungen (11) zur Plattenquerschnittsmitte eingeleitet wird, die bis wenigstens zur Vereinigung der Zungenspitzen fortgesetzt wird.

2. Verfahren nach Anspruch 1, **dadurch gekennzeichnet, dass** die Nut (14) im Querschnitt V-förmig mit einem Spitzenwinkel von 60° bis 120° ist.

3. Verfahren nach Anspruch 1, **dadurch gekennzeichnet, dass** die Nut (14') im Querschnitt trapezförmig ist.

4. Verfahren nach Anspruch 3, **dadurch gekennzeichnet, dass** bei einer trapezförmigen Nut (14') die Breite des Nutgrundes zwischen 25% und 40 % der Plattenstärke beträgt.

5. Verfahren nach Anspruch 1, **dadurch gekennzeichnet, dass** die Nut (14") im Querschnitt kreisabschnittsförmig ist.

6. Verfahren nach einem der Ansprüche 1 bis 5, **dadurch gekennzeichnet, dass** bei einer halbkreisförmigen oder trapezförmigen Nut (14', 14") die Nuttiefe dem 0,45 bis0,55-fachen der Plattenstärke entspricht.

7. Verfahren nach wenigstens einem der vorhergehenden Ansprüche, **dadurch gekennzeichnet, dass** ein Glättungswerkzeug (20) verwendet wird, dessen Profilquerschnitt dem gewünschten Profil des Bereichs der Seitenkante (16, 16', 16") der Kunststoffplatte (10, 10', 10") bei der Entformung entspricht.

8. Verfahren nach wenigstens einem der vorhergehenden Ansprüche, **dadurch gekennzeichnet, dass** ein Glättungswerkzeug (20) verwendet wird, bei dem die Glättungsfläche (24) zur Einleitung der Umklappbewegung an ihrer Ober- und Unterkante in einer Rundung oder in einer Schräge ausläuft.

9. Verfahren nach wenigstens einem der vorhergehenden Ansprüche, **dadurch gekennzeichnet, dass** die Kunststoffplatte (10, 10', 10") in einem Vorbearbeitungsschritt aus einer Integralschaumtafel oder aus einer endlos hergestellten Integralschaumbahn mit einem Zuschlagmaß zum Längensollmaß je zu glättender Seitenkante ausgeschnitten wird.

10. Verfahren nach Anspruch 9, **dadurch gekennzeichnet, dass** bei einer V-förmigen Nut (14) das Zuschlagmaß die Hälfte der Plattenstärke beträgt.

11. Verfahren nach einem der vorhergehenden Ansprüche, **dadurch gekennzeichnet, dass** vor dem Einführen der Seitenkante in das Glättungswerkzeug (20) wenigstens die der Seitenkante (16, 16', 16") benachbarten Bereiche der Kunststoffplatte (10; 10'; 10") bis auf eine Temperatur unterhalb der Erweichungstemperatur vorgewärmt werden.

## Claims

1. A method of producing a thermoplastic integral foam plastics material plate (10 ; 10' ; 10") with at least one smoothed lateral edge (16 ; 16' ; 16"), in which the lateral edge (16 ; 16' ; 16") of the plastics material plate (10 ; 10' ; 10") is heated at least to the melting temperature and is homogenised and/or smoothed by pressure against a smoothing face (24) of a smoothing tool (20) and wherein at the same time regions of the plate surfaces (15) adjacent to the lateral edge are kept by cooling at a temperature below the softening temperature,
**characterised in that**
- in a pre-treatment step the lateral edge is profiled with a concave groove (14) in such a way that the plate surfaces (15) terminate in projecting tongues (11) on both sides towards the lateral edge,
- the tips of the tongues are melted by pressing against the smoothing face (24) and further cross-sectional regions of the tongues (11) are softened and
- a folding movement of the tongues (11) to the middle of the cross-section of the plate is initiated, which is continued at least as far as the join of the tips of the tongues.

2. A method according to claim 1, **characterised in that** the groove (14) is V-shaped in cross-section with an apex angle of from 60° to 120°.

3. A method according to claim 1, **characterised in that** the groove (14') is trapezoidal in cross-section.

4. A method according to claim 3, **characterised in that** in the case of a trapezoidal groove (14') the width of the base of the groove amounts to between 25 % and 40 % of the thickness of the plate.

5. A method according to claim 1, **characterised in that** the groove (14") is in the shape of a circular segment in cross-section.

6. A method according to any one of claims 1 to 5, **characterised in that** in the case of a semicircular or trapezoidal groove (14', 14") the depth of the groove corresponds to from 0.45 to 0.55 times the thickness of the plate.

7. A method according to at least one of the preceding claims, **characterised in that** a smoothing tool (20) is used, the profile cross-section of which corresponds to the desired profile of the region of the lateral edge (16, 16', 16") of the plastics material plate (10, 10', 10") during the removal from the mould.

8. A method according to at least one of the preceding claims, **characterised in that** a smoothing tool (20) is used, in which the smoothing face (24) for initiating the folding movement terminates in a rounded portion or in a sloping portion at its upper and lower edges for initiating the folding movement.

9. A method according to at least one of the preceding claims, **characterised in that** in a pre-treatment step the plastics material plate (10, 10', 10") is cut out of an integral foam panel or out of an endless integral foam web with an additional dimension to the nominal longitudinal dimension of each lateral edge to be smoothed.

10. A method according to claim 9, **characterised in that** in the case of a V-shaped groove (14) the additional dimension amounts to half the thickness of the plate.

11. A method according to any one of the preceding claims, **characterised in that** before the introduction of the lateral edge into the smoothing tool (20) at least the regions of the plastics material plate (10 ; 10' ; 10") adjacent to the lateral edge (16, 16', 16") are preheated to a temperature below the softening temperature.

## Revendications

1. Procédé de fabrication d'une plaque en matériau de mousse synthétique structurée thermoplastique (10 ; 10' ; 10") présentant au moins une arête latérale lissée (16, 16', 16"), selon lequel l'arête latérale (16, 16', 16") de la plaque en matériau synthétique (10 ; 10' ; 10") est réchauffée jusqu'à au moins la température de fusion et homogénéisée et/ou lissée par pression contre une surface de lissage (24) d'un outil de lissage (20) et les zones des surfaces de la plaque (15) voisines de l'arête latérale étant simultanément maintenues au-dessous de la température de ramollissement par refroidissement,
**caractérisé en ce que**
- l'arête latérale est profilée avec une rainure concave (14) au cours d'une étape de traitement préliminaire, de telle sorte que les surfaces de plaque (15) finissent en direction du bord latéral de part et d'autre dans des languettes en saillie (11),
- les pointes des languettes sont fondues par pression sur la surface de lissage (24) et d'autres zones de section transversale des languettes (11) sont ramollies et
- un mouvement de rabattement des languettes (11) en direction du centre en section transversale de la plaque est provoqué et se poursuit au moins jusqu'à la réunion des pointes des languettes.

2. Procédé selon la revendication 1, **caractérisé en ce que** la rainure (14) présente une section transversale en forme de V et un angle de pointe de 60° à 120°.

3. Procédé selon la revendication 1, **caractérisé en ce que** la rainure (14') présente une section transversale trapézoïdale.

4. Procédé selon la revendication 3, **caractérisé en ce que** dans le cas d'une rainure trapézoïdale (14'), la largeur de la base de la rainure est comprise entre 25 % et 40 % de l'épaisseur de la plaque.

5. Procédé selon la revendication 1, **caractérisé en ce que** la rainure (14") présente une section transversale en forme de segment de cercle.

6. Procédé selon l'une quelconque des revendications 1 à 5, **caractérisé en ce que** dans le cas d'une rainure (14', 14") en forme de demi-cercle ou de trapèze, la profondeur de la rainure correspond à 0,45 à 0,55 fois l'épaisseur de la plaque.

7. Procédé selon au moins une des revendications précédentes, **caractérisé en ce qu'**on utilise un outil de lissage (20) dont la section transversale de profil correspond au profil souhaité de la zone de l'arête latérale (16, 16', 16") de la plaque en matériau synthétique (10, 10', 10") lors de la déformation.

8. Procédé selon l'une quelconque des revendications précédentes, **caractérisé en ce qu'**un outil de lissage (20) est utilisé, et selon lequel la surface de lissage (24) destinée à provoquer le mouvement de rabattement finit sur son arête supérieure et inférieure dans une courbure ou un biseau.

9. Procédé selon au moins l'une quelconque des revendications précédentes, **caractérisé en ce que** la plaque en matériau synthétique (10, 10', 10") est découpée au cours d'une étape de traitement préliminaire à partir d'un panneau de mousse structurée ou d'une bande de mousse structurée sans fin avec une dimension majorée par rapport à la dimension théorique longitudinale respectivement en direction de l'arête latérale à lisser.

10. Procédé selon la revendication 9, **caractérisé en ce que** dans le cas d'une rainure en forme de V (14), la dimension majorée s'élève à la moitié de l'épaisseur de la plaque.

11. Procédé selon l'une quelconque des revendications précédentes, **caractérisé en ce qu'**avant d'insérer l'arête latérale dans l'outil de lissage (20), au moins les zones de la plaque en matériau synthétique (10 ; 10' ; 10") voisines de l'arête latérale (16, 16', 16") sont préalablement chauffées jusqu'à une température inférieure à la température de ramollissement.
